# EUROPEAN PATENT SPECIFICATION

(11) **EP 4 401 950 B1**
(45) Date of publication and mention of the grant of the patent: **10.09.2025**
(21) Application number: 22773555.2
(22) Date of filing: 15.09.2022
(51) Int. Cl.: B29C 65/36, B29C 65/48, B29C 65/50

(54) **METHOD FOR ELECTROMAGNETIC WELDING OF MOLDED PARTS**
VERFAHREN ZUM ELEKTROMAGNETISCHEN SCHWEISSEN VON FORMTEILEN
PROCÉDÉ DE SOUDAGE ÉLECTROMAGNÉTIQUE DE PIÈCES MOULÉES

(30) Priority: 17.09.2021 NL 2029204
(43) Date of publication of application: 24.07.2024
(73) Proprietor: KOK & VAN ENGELEN COMPOSITE STRUCTURES B.V., 2497 GB Den Haag (NL)
(72) Inventor: BRUIJKERS, Michiel Hendrik Paul, 2497 GB THE HAGUE (NL); LABORDUS, Maarten, 2497 GB THE HAGUE (NL)
(74) Representative: Arnold & Siedsma
(86) International application number: PCT/NL2022/050519
(87) International publication number: WO 2023/043310

(56) References cited:
- WO-A1-2021/006725
- US-A- 5 902 935
- GINGER GARDINER: "Welding thermoplastic composites", COMPOSITES WORLD, vol. September 2018, 30 September 2018 (2018-09-30), pages 50 - 63, XP055588719

## Description

### TECHNICAL FIELD OF THE INVENTION

The invention relates to a method of connecting surfaces of a first molded part and a second molded part by electromagnetic welding. The first molded part is provided with a first lightning strike protection (LSP) material at an outer surface thereof. The invention also relates to an assembly of a first molded part, provided with a first lightning strike protection (LSP) material at an outer surface thereof, and a second molded part, surfaces whereof are connected by electromagnetic welding. The first molded part may comprise a skin panel of an aircraft, and the second molded part may comprise a stiffener, rib or other structural element for supporting the skin panel.

Further, the electromagnetic welding of the molded parts may comprise spot welding that produces a discontinuous weld at one point of welding by providing a stationary inductor that, under alternating voltage, generates an electromagnetic field. The invented method may also relate to continuous welding in which the inductor is moved over the molded parts to be welded together along a trajectory of welding.

### BACKGROUND OF THE INVENTION

A number of technologies exist for joining molded parts, for instance fibre reinforced thermoplastic or thermosetting composite parts. Mechanical fastening and adhesive bonding are traditionally used to join two contact surfaces of the molded parts. However, both mechanical fastening and adhesive bonding appear to be costly and time consuming. Mechanical fastening for instance requires expensive hole locating, drilling, shimming, and fastener installation, while adhesive bonding requires complicated surface pre-treatments that may involve chemical substances.

Electromagnetic welding may eliminate the use of separate fasteners and potentially offers the ability to join contact surfaces of molded composite parts at relatively high speeds and little, if any, pre-treatments. Electromagnetic welding generates an electromagnetic field in an induction-sensitive component of one or more of the molded part(s) to heat a heat meltable coupling means of the molded part(s) to above a melting temperature of the coupling means. The contact surfaces of the molded parts are joined to each other by the molten coupling means. The coupling means may for instance be a thermoplastic resin of one or more of the parts to be joined, or may be a separately applied thermoplastic resin. For welding thermoplastic and thermoset molded parts together, the thermoplastic resin that the induction-sensitive component melts may function as a hot melt adhesive for instance.

Thermoplastic composites are increasingly used in the aerospace industry as the preferred choice of material. The increase in applicability of polymeric composites in aircraft structures comes with a lot of advantages but their weak electrical conducting properties may mean that lightning strikes of an aircraft offer serious problems. In composite structures, lightning strikes may cause catastrophic failures or in the best case, extended damage sites which require appropriate maintenance and repairs leading to increased operational costs.

To avoid such damages, lightning strike protection (LSP) is regularly used in aircraft in lightning strike sensitive regions. LSP materials, for instance in the form of a metal mesh or expanded foil is laminated within the composite laminate (for instance a skin panel of an aircraft) at an outer layer thereof, in order to dissipate energy and reduce damage to the laminate. The outer layer of the laminate is defined as the layer that faces the outside of an aircraft skin panel of an aircraft.

WO 2021/006725 A1 from the applicant discloses a fuselage structure of an aircraft. The fuselage skin comprises a plurality of interconnected fiber-reinforced composite skin panels. The panels may be interconnected through induction welding. As shown in the embodiment of figure 10 of WO 2021/006725 A1, an outer layer of two panels is provided with LSP material (6-3) and is connected to a stiffener, an outer layer of which is also provided with a LSP material (30-3). As shown, the two LSP material layers (6-3, 30-3) are in direct contact which each other. This has the disadvantage of easily producing too much heat in induction welding, leading to possible degradation and damage.

Indeed, the use of a LSP material provides challenges, especially in electromagnetic induction welding. The LSP material used tends to heat up more than the induction-sensitive component, such as a carbon fiber, during induction welding and this may lead to burning of laminates by overheating , and less than optimal bond strength between the surfaces connected by electromagnetic welding. The weld strength in shear may be impaired by the presence of the LSP material in the outside layers, since the weld temperatures at the interface are significantly reduced. In addition, welded connections may also not provide enough strength in a direction perpendicular to a plane of the welded molded parts. So-called out-of-plane loads tend to delaminate (parts of) the welded molded parts, which is undesirable.

### SUMMARY OF THE INVENTION

It is an object of the invention to provide an improved method for electromagnetic welding of molded parts, of which a first is provide with a LSP material. It is another aim of the invention to provide an assembly such molded parts. The assembly preferably has an increased resistance against out-of-plane loads and delamination when compared to the state-of-the-art assemblies.

The invention provides for this purpose a method in accordance with claim 1.

With the method it becomes possible to obtain a good-quality welded connection between the molded parts in a rapid and efficient manner, without the risk of overheating and burning the outer surface with lightning strike protection, wherein the welded product has a particularly good mechanical load-bearing capacity as well as lighting strike protection. To avoid overheating, the claimed method comprises cooling the outer surface of the first molded part by providing a heat sink in direct contact with the outer surface as an essential feature.

In contrast with the disclosure of WO 2021/006725 A1, which lacks cooling means during induction welding, another embodiment of the present invention further aims at preventing overheating. This embodiment comprises a method wherein the first LSP and the second LSP material are positioned such that they do not contact each other directly after step B), i.e. having brought together the surfaces to be connected and having pressurized the surfaces to be connected. This may for instance be achieved by providing the first and second LSP material at a distance from each other, for instance providing the second LSP material at a distance from the outer surface of the first molded part where the first LSP material is provided. The distance may be achieved by provided one of more layers of an electrically insulating material in between the first and second LSP material layers. The electrically insulating material does not or poorly conduct electricity. A possibility is to cover at least one of the LSP material layers with a protective material layer, for instance made from a (non-carbon fiber-reinforced) thermoplastic, a coating material, and the like.

The molded parts comprise a heat meltable coupling means and an induction-sensitive component. The claimed method generates an electromagnetic field in at least the surfaces of the molded parts to be connected by means of the inductor of the pressurizing body, thereby heat melting the coupling means by heating the induction-sensitive component. The claimed method is configured to provide a geometrically focussed heated volume in the molded parts. This is made possible by providing the second lightning strike protection (LSP) material at the surfaces to be connected.

The first LSP material is provided at an outer surface of the first molded part, whereas the second LSP material is provided at the surfaces to be connected. Providing the first LSP material at the outer surface of the first molded part may comprise an embodiment wherein the outer surface comprises or is formed by the first LSP material. It may however also comprise embodiments wherein the LSP material is provided in the first molded part at a position close or near to the outer surface of the first molded part.

For instance, in an embodiment, a method is provided wherein the first molded part comprises a laminate of stacked layers, and the first LSP material is provided as an outer layer of the laminate, or as a layer below an outer layer of the laminate. **In** the latter embodiment, the LSP material may be provided as a layer just below the outer layer of the laminate, or as a layer within two layers from the outer surface.

The second LSP material is provided at the surfaces to be connected. **In** a suitable embodiment, a method is provided wherein the second LSP material is provided in the first molded part. Providing the second LSP material at the surface to be connected of the first molded part may comprise an embodiment wherein the surface to be connected comprises or is formed by the second LSP material. It may however also comprise embodiments wherein the second LSP material is provided in the first molded part at a position close or near to the surface to be connected of the first molded part.

For instance, in an embodiment, a method is provided wherein the first molded part comprises a laminate of stacked layers, and the second LSP material is provided as a layer of the laminate that includes the surface to be connected. It may also be provided as a layer below the layer that includes the surface to be connected of the laminate. In the latter embodiment, the second LSP material may be provided as a layer just below the layer that includes the surface to be connected of the laminate, or as a layer within two layers from the layer that includes the surface to be connected.

In another embodiment of the invented method, the second LSP material is provided in the second molded part. Providing the second LSP material at the surface to be connected of the second molded part may comprise an embodiment wherein the surface to be connected comprises or is formed by the second LSP material. It may however also comprise embodiments wherein the second LSP material is provided in the second molded part at a position close or near to the surface to be connected of the second molded part.

For instance, in an embodiment, a method is provided wherein the second molded part comprises a laminate of stacked layers, and the second LSP material is provided as a layer of the laminate that includes the surface to be connected. It may also be provided as a layer below the layer that includes the surface to be connected of the laminate. In the latter embodiment, the second LSP material may be provided as a layer just below the layer that includes the surface to be connected of the laminate, or as a layer within two layers from the layer that includes the surface to be connected.

Preferably, the first molded part has an average thickness and the first LSP material is provided within the first molded part at a position that is at a distance from the outer surface of the first molded part of within 25% of the average thickness of the first molded part, more preferably of within 20% of the average thickness of the first molded part, even more preferably of within 15% of the average thickness of the first molded part, and most preferably of within 10% of the average thickness of the first molded part.

Also preferably, the first and/or second molded part have an average thickness and the second LSP material is provided within the first and/or second molded part at a position that is at a distance from the surface to be connected of the first and/or second molded part of within 25% of the average thickness of the first and/or second molded part, more preferably of within 20% of the average thickness of the first and/or second molded part, even more preferably of within 15% of the average thickness of the first and/or second molded part, and most preferably of within 10% of the average thickness of the first and/or second molded part.

An even more preferred embodiment of the invention provides a method wherein the second LSP material is provided in the first and in the second molded part.

LSP material is known in the art. As already noted above, aircraft flying in thunderstorms may be at risk to lightning strikes. Civil and military aircraft pilots avoid thunderstorms by circumvention of thunderclouds, flying over the tops or below the bases of the clouds. Sometimes however, flying in bad weather may not be avoided for economical or military strategic reasons and lightning strikes then provide a relatively higher damage threat to the components of the aircraft, such as its fuselage. When lightning strikes an airplane, it may have a direct and an indirect effect on the different parts of an aircraft. Direct effects include physical damage effects at the point of the lightning flash attachment to the aircraft. The direct lightning effects on aircraft structures are of great importance nowadays, because of the massive use of composite materials in the new generations of aircrafts. Indirect effects may also occur, for instance when lightning strikes an aircraft, inducing high-intensity radiated electromagnetic fields that produce electrical current surges in the aircraft wiring that results in a malfunction of electrical equipment.

Aerospace composite molded parts that may be protected by LSP materials may include but are not limited to engine nacelles, flaps, wing tips, and even rotary blades on helicopters. With LSP materials, the lightning strike energy is dissipated over the surface of the component, which prevents damage to the composite material below.

LSP may also be provided for wind turbine applications. **In** this case, as with all rotary blades, lightning is more prone to hit a leading edge of the blade and LSP material provided at the leading edge may solve the problem. Other structures to be protected by LSP may include residential gas lines, marine and land-based masts, and the like. The application of LSP materials in molded parts may have several goals. They provide adequate conductive paths so that lightning current remains on the structure's exterior; they eliminate gaps in this conductive path to prevent arcing at attachment points and ignition of combustible materials such as fuel vapors; and they protect wiring, cables and sensitive equipment from damaging surges or transients through careful grounding, EMF shielding and application of surge suppression devices where necessary.

For external surface protection of molded parts, a number of metal and metallized fiber materials have been developed, typically woven and nonwoven screens and expanded foils. These mesh-like products enable the lightning's current to quickly transmit across the structure's surface, reducing its focus. Aluminum wire was one of the first LSP materials, interwoven with carbon fiber as part of the laminate. However, using aluminum with carbon fiber risks galvanic corrosion. Therefore, metals such as copper wires relieve the threat of galvanic corrosion, however at the cost of increased weight. As fiber reinforced composites were more widely used in aircraft, foils and expanded foils, which can be cocured with a composite laminate's exterior layer were developed. Coated fibers (nickel or copper electrodeposited onto carbon and other fibers) may also be used.

A preferred embodiment of the invented method is characterized in that at least one of the first and second LSP material comprises a metal planar structure, such as a metal mesh or metal foil, more preferably a metal mesh and expanded foil, even more preferably a metal mesh.

Such LSP materials are readily available, for instance at Astroseal Products under the name of Astrostrike, at Dexmet, or at ECC GmbH & Co. KG. Expanded foil is typically made from a solid foil, which is then perforated and expanded to increase formability and augment adhesion to composite structures.

Other LSP systems may include LSP prepregs, which contain pre-embedded woven or nonwoven metal meshes. LSP prepregs are typically made from either woven or nonwoven metal mesh impregnated with hot-melt adhesive resins that are modified with additives to enhance conductivity of the matrix, making the entire prepreg a conductive system. Metal mesh options include copper, aluminum, phosphor bronze and nickel/copper-coated fiber, such as polyester fiber, in various sizes.

Other types of LSP materials comprise metallized fabrics and/or metallized fibers that may be used to produce LSP fabrics. A wide variety of metals including nickel, copper, silver, gold, palladium, platinum and metal hybrids (multilayer coatings) may be used. These coated fibers may be obtained as continuous fiber lengths, chopped fibers, woven fabrics and nonwoven veils/mats.

LSP material has a relatively high magnetic field shielding characteristic. It makes it desirable to protect the electronic components of the aircraft as the induced currents from the lightning strikes move in the aircraft. It therefore also heats up much better than the underlying carbon fibre reinforced thermoplastic laminates. This property makes it difficult to weld laminates that have LSP on them. The LSP also shields the magnetic field from penetrating the laminates reducing the power induced at the weld zone. The invented method offers a solution to this problem.

The first and/or second molded part may conveniently be made by fiber-reinforced composite materials, comprising reinforcing fibers such as carbon, graphite, and/or glass fibers, and a matrix material in which the reinforcing fibers are embedded. The matrix material preferably comprises a thermoplastic polymer. Examples of suitable matrix materials for the reinforcing fibers include but are not limited to thermoplastic polymers such as polyamides, polyimides, polyethersulphones, polyetheretherketone (PEEK) and polyetherketoneketone (PEKK), polyurethanes, polyphenylene sulphides (PPS), polyamide-imides, polycarbonate, polyphenylene oxide blend (PPO), as well as mixtures and copolymers of one or more of the above polymers. The fibrous composites typically comprise from 25% to 60% by volume of fibers.

The first and/or second molded part may comprise fiber-reinforced composite layers in the form of a woven fabric for instance. The layers preferably comprise substantially continuous fibers that mainly extend in one direction (so called UD material), like under angles of 0°, 90° and/or 45° with respect to a reference direction. The layers are preferably provided symmetrically with respect to a mid-plane of the laminate. It is advantageous to use the fiber-reinforced composite layer in the form of a preimpregnated semi-finished product. Such a "prepreg" shows generally good mechanical properties, among other reasons because the fibers have already been wetted in advance by the matrix polymer. Laminates of UD reinforced fibers with a PPS and/or a PEKK polymer matrix are particularly preferred.

The heat sink is provided between the inductor and the pressurizing surface and preferably in direct contact with both. The material of the heat sink is electrically insulating yet thermally conductive, and is configured for extracting heat from the surroundings. The heat sink acts as a passive heat exchanger that transfers the heat generated in a top part of the molded parts to the surrounding air, or to cooling means provided on or in the inductor. Suitable materials for the heat sink have a high thermal conductivity, but very low electrical conductivity. The heat sink preferably is made from a ceramic material.

A preferred embodiment of the device comprises a heat sink having a planar dimension in contact with the pressurizing surface larger than a cross-sectional dimension of the inductor. This embodiment not only improves heat transfer but also provides a more spread-out and uniform pressure on the molded parts.

A shielding may be provided around at least a part of the inductor in order to protect against overheating. **In** an exemplary embodiment of the device, the pressurizing body has two side surfaces in addition to the pressurizing surface, and a top surface opposite the pressurizing surface, and the shielding is positioned between the inductor and the side surfaces.

The material of the shielding is preferably thermally insulating. Suitable materials from which the shielding may be manufactured include but are not limited to magneto-dielectric materials, and materials having metallic particles embedded in a binder, such as electrically insulated iron particles embedded in an organic binder. These materials are commercially available, for instance under the trade name Fluxtrol^{®}.

The geometry of the inductor, such as its cross-sectional shape, may in principal be chosen according to the needs. The cross-section may for instance be triangular, or circular. A useful embodiment relates to a device wherein the inductor has a quadrilateral cross-section.

The 3D shape of the inductor may also be chosen according to the needs. This may be relevant since, in some embodiments disclosed further below, the inductor not only needs to heat the molded parts at the position of welding, but may also need to heat other parts of the device. The electromagnetic field in some embodiments therefore needs to be extended.

This may also be provided in an embodiment wherein the inductor of the pressurizing body comprises a first and a second inductor, or even a plurality of inductors.

In an embodiment, a device is provided wherein the inductor has a linear segment such that the inductor is configured to generate a substantially cylindrical electromagnetic field in at least the surfaces to be connected of the molded parts. In this manner, the contact surface between the molded parts can be heated in highly selective manner, whereby a precise spot welded connection is obtained.

The position of the inductor in the pressurizing body may also be chosen according to the needs. In a practical embodiment of the device, the inductor is positioned in the pressurizing body such that the linear segment extends substantially parallel to the pressurizing surface of the pressurizing body.

The device according to the invention applies pressure onto the molded parts to be welded by means of the pressurizing body. Another embodiment of the device comprises counter-pressure means at a side of the joined molded parts opposite to the pressurizing surface, either passive or active.

The device as claimed in a practical embodiment is provided at an end of a robotic arm or other tool as end-effector. This allows positioning the pressurizing body accurately on the joined molded parts in order to define and effectuate a welding path.

One or more of the molded parts are preferably manufactured from a thermoplastic material which can be welded by fusion, although it is also possible to envisage arranging a thermoplastic material or a heat meltable adhesive only on the contact surface between the molded parts as thermal coupling means.

In the method, the molded parts are generally provided with an electrically conductive component, for instance metal gauze, or this component is arranged between the molded parts. Foucault currents or eddy currents are induced in the electrically conductive component by a fluctuating electromagnetic field which is generated by the inductor, preferably supplied with alternating current by a generator. Owing to the Joule effect, these Foucault currents generate the heat required to melt the heat meltable coupling means. By positioning the inductor above the position to be welded, the molded parts are mutually connected at the welded position.

The use of a substantially cylindrical electromagnetic filed in an embodiment of the method, enables a controlled, uniform and targeted heating, so that overheating in the molded parts that need not be welded is prevented as far as possible. Overheating may result in degradation of material, and thereby cause undesirable weakening of the construction. A cylindrical electromagnetic field can moreover be made very narrow, up to a width of 10-20 mm.

For the purpose of heating the induction-sensitive component in the molded parts, they must be in thermal contact with the heat meltable coupling means. This is for instance possible by mixing the induction-sensitive component and the heat meltable coupling means, such as in an injection mouldable compound.

Depending on the materials used, in particular the induction-sensitive component and the distance of the inductor from this component, a suitable power and frequency can be determined. The frequency determines inter alia the penetrative power of the electromagnetic field; the electric power of the inductor determines the strength of the fluctuating electromagnetic field and thereby the degree of heat generated in the induction-sensitive component.

It is advantageous if the heat meltable coupling means comprises a thermoplastic polymer. Thermoplastic polymers can be coupled in simple manner by fusion. Furthermore, it is easy to mix a thermoplastic polymer with an induction-sensitive component such as metal gauze or carbon fibres. Examples of particularly suitable thermoplastic polymers are polypropylene, polyamide, polyether imide, polyether ether ketone and polyphenylene sulphide, although the method is in principle suitable for any thermoplastic.

The component heatable by induction preferably comprises carbon fibres and/or a metal. These materials can be readily heated by induction and also have, in addition to electrical conduction, a good thermal conduction, whereby the generated heat is well distributed. Carbon fibres incorporated in a thermoplastic polymer are recommended because the carbon fibres also improve the material strength.

In another preferred embodiment of the method the component heatable by induction comprises ferromagnetic particles. Suitable particles are for instance described in WO0185827 and have the additional advantage that, when they reach the so-called Curie temperature thereof, they lose their magnetic dipoles, whereby they do not heat any further. This can form a protection against overheating.

The Foucault currents or eddy currents induced in the surfaces to be connected are bounded by the geometry of the molded parts. Edges, corners and holes in the molded parts influence the distribution of Foucault currents and therefore also influence the heat developed. Such disruptions of the field may result in heating of components which do not have to be heated for the welding process. Conversely, it is also possible that some parts are difficult to heat. These problems can be solved by repositioning the boundaries of the area where Foucault currents may begin to occur at determined locations of the thermoplastic molded parts. With this preferred embodiment, parts that were formerly difficult to heat can nevertheless be heated and high temperatures at undesired locations can be prevented.

For application in the method as claimed in the invention, the inductor is connected to an alternating current generator, wherein the alternating current generator is electrically connected to the electrical connecting means of the inductor. Usable frequencies lie generally between 0.1-10 MHz. A frequency between 0.1 and 0.5 MHz is preferably used, and more preferably a frequency between 0.15 and 0.4 MHz. At such a preferred frequency an optimal balance is achieved between penetrative power of the electromagnetic field and rate of heating.

It is advantageous if the inductor is substantially flat or has a straight section. This is possible for instance by embodying the inductor as an electrical conductor lying in one plane. Such a flat inductor is exceptionally compact and suitable for applying an electromagnetic field at a determined position in very precise and uniform manner.

In a further preferred embodiment the inductor is provided with at least one feed channel adapted for passage of a cooling medium, such as in sheath cooling. The temperature of the inductor can hereby be held constant during use, this also being favourable for the electrical resistance of the inductor. The cooling medium is preferably a liquid such as water, with a high heat capacity. The induction part can for instance be a metal tube bent into the desired form, through which the cooling medium is pumped while an electromagnetic field is caused through the metal of the tube itself with an alternating voltage.

The method according to an embodiment may be characterized in that the first molded part comprises a skin panel of an aircraft, and the second molded part comprises a stiffener for supporting the skin panel. The advantageous of the invented method are in particular relevant for such application.

Another aspect of the invention relates to an assembly of a first molded part and a second molded part, according to claim 14.

Preferably, the assembly is provided such that the first molded part comprises a skin panel of an aircraft, and the second molded part comprises a stiffener for supporting the skin panel.

### BRIEF DESCRIPTION OF THE FIGURES

The invention will now be elucidated with reference to the following figures, without however being limited thereto. In the figures:
Figure 1 schematically shows a welding system that may be used in am method in accordance with an embodiment of the invention;
Figure 2 schematically shows a cross-sectional view of a step of the welding method in accordance with an embodiment of the invention;
Figure 3 schematically shows a cross-sectional view of an experimental set-up used in evaluating the welding method in accordance with an embodiment of the invention;
Figure 4 schematically shows a cross-sectional view of a first molded part in accordance with an embodiment of the invention;
Figure 5 schematically shows a graph of the achievable shear strengths of a weld obtained by the method in accordance with an embodiment of the invention and the prior art; and
Figure 6 schematically shows a graph of the achievable bond strengths of a weld obtained by the method in accordance with an embodiment of the invention and the prior art.

### DESCRIPTION OF EXEMPLARY EMBODIMENTS

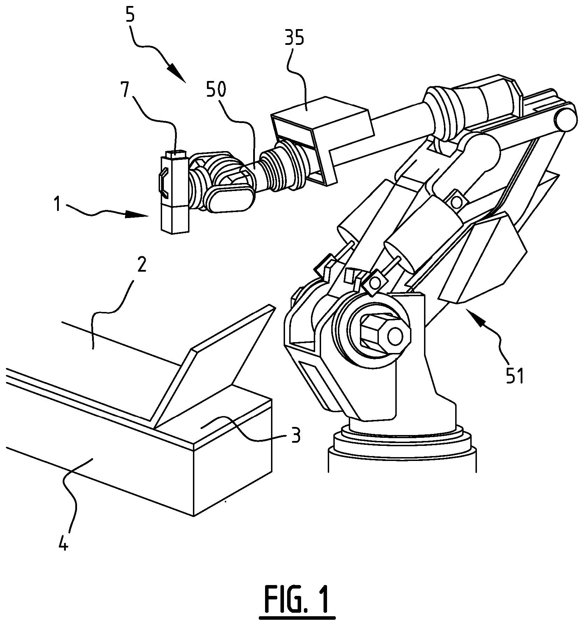

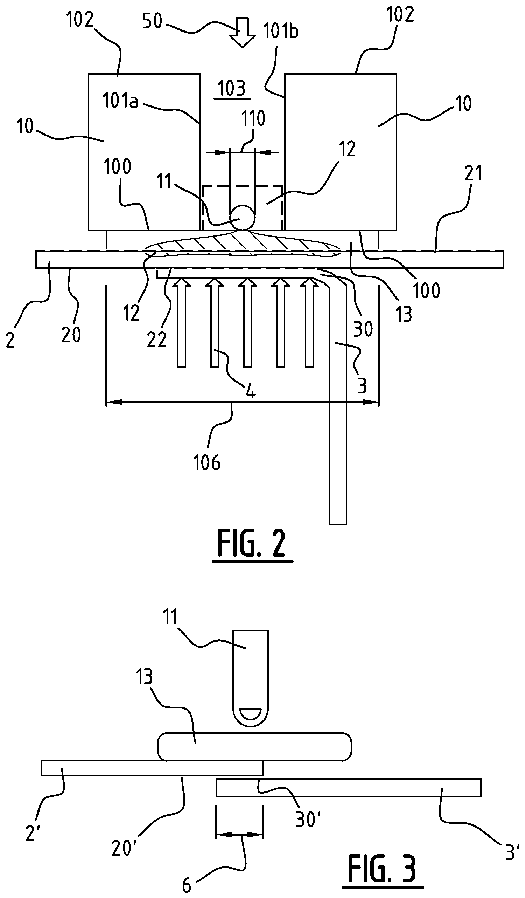

Figure 1 shows a welding system 5 provided with a device 1 that may be used in the method in accordance with an embodiment of the invention. The device 1 acts as an end-effector of a robotic arm 50 that is part of an industrial six-axis robot 51. It should be noted that the robotic arm 50 is not essential to the invention and that other displacing means for the device 1 may be envisaged, such as a static actuator. The robot 51 is programmed to move the robotic arm 50 and the end-effector device 1 towards an assembly of molded parts (2, 3) to be welded along a path, or to be welded in positions where a spot weld has to be made. An inductor 11 that is incorporated in a pressurizing body 10 of the device 1 (see figure 2) is in operation connected to an alternating current generator 52 arranged on the robot 51 for the purpose of generating an electromagnetic field. The alternating current generator 52 may however be positioned elsewhere, and may even be incorporated in the pressurizing body 10 of the device 1. In the embodiment shown, counter-pressure means 4 are provided at a side of the joined molded parts (2, 3) opposite to the side where the robotic arm 50 is approaching the assembly (2, 3). The counter-pressure means 4 may be embodied as a solid body or may be active in the sense that it can be pressed against said side of the joined molded parts (2, 3).

As shown in more detail in figure 2, a suitable device 1 for connecting surfaces of the molded parts (2, 3) by electromagnetic welding comprises a pressurizing body 10 that may be a solid block of high-temperature non-metallic material may be embodied otherwise, as long as it may exert pressure on a substrate. The pressurizing body 10 of figure 2 has two side surfaces (101a, 101b) in addition to the pressurizing surface 100, and a top surface 102 opposite the pressurizing surface 100. As shown, the pressurizing body 10 further has a central cavity 103 in certain embodiments, described further below, but the central cavity is not an essential feature for the invention. Please note that figure 2 represents a cross-sectional view though a vertical mid-plane of the device 1. Although the cavity 103 may appear open at a front side, it will in embodiments be enclosed by the pressurizing body 10 material, such as in a central cylindrical cavity provided in a solid block for instance.

The robotic arm 50 is programmed to move a pressurizing surface 100 of the pressurizing body 10 against the molded parts (2, 3) or vice versa. As shown in figure 2, contact surfaces (20, 30) of the molded parts (2, 3) to be fused by welding are then joined (but not yet welded) under pressure.

According to figure 2, the pressurizing body 10 further comprises an inductor 11 provided in the pressurizing body 10. The inductor 11 is configured to generate an electromagnetic field 12 in at least the contact surfaces (20, 30) to be connected of the molded parts (2, 3). In the embodiment shown, the inductor 11 has a cylindrical cross-section, and further is provided with a linear segment such that the inductor is configured to generate a substantially cylindrical electromagnetic field in at least the contact surfaces (20, 30) to be connected of the molded parts (2, 3). In this way, the electromagnetic filed may be concentrated to not extend much further than the position to be welded. The linear segment(s) in figure 2 extend substantially parallel to the pressurizing surface 100 of the pressurizing body 10. More than one inductor may be used.

A shielding 12 may also be provided in the pressurizing body 10 around at least a part of the inductor 11. The shielding is configured to protect against overheating, and is thereto made from a suitable heat isolating material, such as Fluxtrol^{®}. The shielding 12 comprises a block structure that is positioned between the inductor 11 and the side surfaces (101a, 101b) of the pressurizing body 10.

The invented device 10 further comprises a heat sink 13 that may be incorporated in the pressurizing body 10 and is provided in between the inductor 11 and the pressurizing surface 100. The heat sink 13 moreover is positioned such that it is in direct contact with (a lower surface of) the inductor 11 and the pressurizing surface 100. The heat sink 13 may be embodied as a plate like structure that moreover, may have a planar dimension 106 in contact with the pressurizing surface 100 that is larger than a cross-sectional dimension 110 of the inductor 11. The heat sink 13 is preferably made from a ceramic material.

According to the invention, the first molded part 2 is provided with a first lightning strike protection (LSP) material 21 at an outer surface thereof. The first LSP material 21 is provided in the form of a sheet of copper mesh, or expanded copper foil for instance. Further, the invention requires that a second lightning strike protection (LSP) material 22 is provided at the surfaces (20, 30) to be connected. The second LSP material 22 may also be provided in the form of a sheet of copper mesh, or expanded copper foil for instance. The first and second LSP material (21, 22) may be the same, or may be different, both in material type, shape and physical appearance. In the example of figure 2, the first layer of LSP material 21 and the second layer of LSP material 22 are both provided as separate or intermediate layers between the first molded part 2 and the heat sink 13, and the first molded part 2 and the second molded part 3 respectively. Also, this embodiment shows an assembly of a first molded part 2 comprising a skin panel of an aircraft, and a second molded part 3 comprising a stiffener for supporting the skin panel.

In an initial step (figure 2), a device 1 is provided in proximity to a first molded part 2 and a second molded part 3 that need to be connected that electromagnetic welding. The molded parts (2, 3) are separated from each other at first but are brought together by moving the pressurizing surface 100 of the pressurizing body 10 against the molded parts (2, 3) or vice versa with the robotic arm 50 such that the contact surfaces (20, 30) of the molded parts (2, 3) to be fused by welding are brought together or joined (but not welded) under pressure. The molded parts (2, 3) comprise a heat meltable coupling means and an induction-sensitive component to heat them up under the influence of an electromagnetic field, produced by the inductor 11. Thereto, the molded parts (2, 3) may be manufactured from a thermoplastic polymer reinforced with carbon fibres, wherein the carbon fibres may serve as induction-sensitive component, whereas the thermoplastic polymer may serve as heat meltable coupling means. The molded parts (2, 3) can for instance comprise carbon fibre-reinforced polyphenylene sulphide, for instance with a material thickness of 1-3 mm. The first molded part 2 may represent the skin of an aircraft, while the second molded part 3 may have a folded edge, and may for instance represent a stiffener. Obviously, both molded parts (2, 3) may have another shape, such as being curved.

Another step comprises generating an electromagnetic field in at least the contact surfaces (20, 30) toe be connected of the molded parts (2, 3) with the inductor 11 of the pressurizing body 10, while at the same time optionally cooling the inductor 11 with the sheath cooling 111. This heats (and possibly melts) the thermoplastic polymer of the molded parts (2, 3) in a volume that covers part of the contact surfaces (20, 30) of both molded parts (2, 3) by heating the carbon fibers in the molded parts (2, 3). The temperature in the volume may not be uniform throughout, and a central part of the volume only may have a temperature that exceeds the melting temperature of the thermoplastic polymer. The second LSP material 22 provided between the two molded parts (20, 30) is instrumental in focussing the heat in the volume where it is needed (around the welding path). Also, a cylindrical electromagnetic field is preferred for this reason. Such a field may be induced by an inductor 11 having linear segment(s). The specific configuration of the pressurizing body 10 that comprises shielding 12 and the heat sink 13 may also provide a controlled and well focussed heated volume. The heating of the molded parts (2, 3) in the joined configuration to a temperature which is high enough to heat melt the thermoplastic polymer (or optionally a heat meltable adhesive applied to contact surfaces (20, 30) fuses the two molded parts (2, 3) together at least in a volume along a welding path. During the heating and/or optionally a short time thereafter, the contact surfaces (20, 20) are preferably pressed together by the pressurizing body 10 itself, and by counter-pressure means 4, so as to thus bring about a connection between the molded parts (2, 3). Due to the use of the second LSP material, this connection has a particularly high mechanical load-bearing capacity, as will be shown further below. The pressuring body 10 is finally removed from the welded molded parts (2, 3) by the robotic arm 50.

### Experiments

Three different configurations of a single-lap shear (SLS) joint were manufactured by electromagnetic welding. The SLS specimens are shown in figure 3, together with the welding set-up. The dimensions of the welded parts (2', 3') of the SLS were those as specified in the ASTM D3165-07 international standard. The overlap length 6 was 60 mm. Part 2' stands for an aircraft skin, while part 3' represents a stiffener.

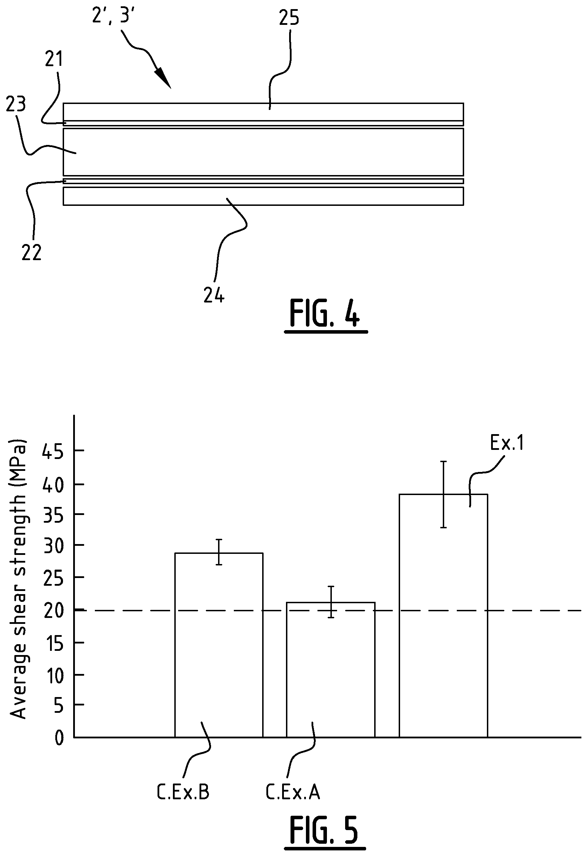

Example 1 represents an example in accordance with the invention, while Comparative Experiments A and B represent the prior art. The laminated molded parts 2' and 3' both had the lay-up given in figure 4 in Example 1. In particular, 16 plies (layers) of unidirectional polyether-ketone-ketone (PEKK) carbon composite were laid up to form a laminate 23. A LSP material in the form of a copper wire mesh (CWM) (Spörl LP-1105 with an aerial density of 72g/m²) was consolidated at a bottom position (LSP material 22) and a top position (LSP material 21) of the laminate 23 of UD-PEKK. The CWM material was covered by a bottom PEKK foil (24) and a top PEKK foil (25) of 0.5 mm thickness, and consolidated with the PEKK laminate 23 in an autoclave. Both parts 2' and 3' had a length of 600 m. The UD-PEKK laminate had a [45|90|-45|0|45|0|-45|90]s layup.

The configuration of Example 1 was compared with configurations according to the state of art, as shown below in Table 1.

**Table 1: SLS tested configurations**

| Experiment | Configuration |
|---|---|
| Example 1 | UD-PEKK + 72 g/m² CWM |
| Comparative Experiment A | UD-PEKK |
| Comparative Experiment B | Woven fabric-PPS |

Comparative Experiment uses a 16 ply UD-laminate only, while Comparative Experiment uses a 16 ply laminate of woven fabric/PPS prepregs, where PPS is polyphenylene sulphide.

All configurations were welded under 6 bars of pressure at a welding temperature exceeding the melting temperature of the respective matrix material (PEKK or PPS).

SLS testing was carried out in shear, yielding a shear strength (in MPa) and a bond strength (in N/mm) respectively. The maximum load the coupon experienced just before the welded bond broke was measured using a Zwick/Roel test bench. Paper was glued on the coupons to improve the grip of laminates before they were placed on the test bench. The coupons were gripped at 50 mm on the top and bottom.

The shear strength values obtained for the three configurations are shown in figure 5. The shear strength is calculated by the maximum load divided by the bond area. Clearly so, the laminate according to the invention (Example 1) had the highest average shear strength of around 40 MPa followed by the Fabric-PPS laminate of Comparative Experiment B and then the UD-PEKK laminate of Comparative Experiment A. This clearly shows the beneficial effect of the method according to the invention.

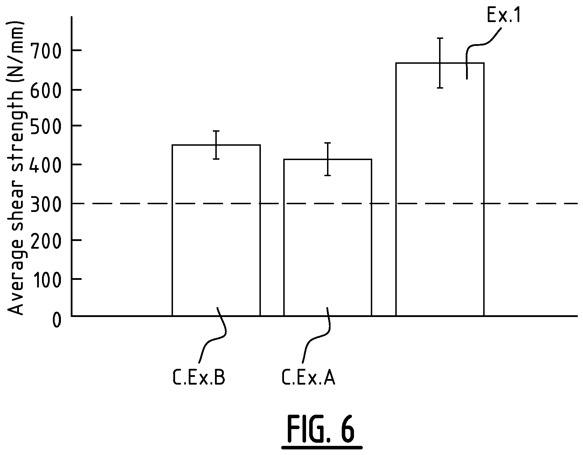

This picture is confirmed by the bond strength values obtained for the three configurations, as shown in figure 6. The bond strength is calculated by the maximum load divided by the width of the bond area. Again, the laminate according to the invention (Example 1) has the highest average bond strength of around 660 N/mm followed by the Fabric-PPS laminate of Comparative Experiment B and then the UD-PEKK laminate of Comparative Experiment A. This clearly confirms the beneficial effect of the method according to the invention.

## Claims

1. Method of connecting surfaces of a first molded part (2) and a second molded part (3) by electromagnetic welding, the first molded part being provided with a first lightning strike protection, namely first LSP, material (21) at an outer surface thereof, comprising the steps of:
A) providing the first and the second molded part to comprise a heat meltable coupling means and an induction-sensitive component;
B) bringing together the surfaces to be connected and pressurizing the surfaces to be connected by providing a pressurizing surface (100) of a pressurizing body (10) against the molded parts;
C) generating an electromagnetic field in at least the surfaces to be connected of the molded parts by means of an inductor (11), thereby heat melting the coupling means by heating the induction-sensitive component;
D) cooling the outer surface of the first molded part by providing a heat sink (13) in direct contact with the outer surface;
E) coupling the molded parts under pressure by the molten heat meltable coupling means;
wherein a second lightning strike protection, namely second LSP, material (22) is provided at the surfaces to be connected, and wherein the first LSP and the second LSP material are positioned such that they do not contact each other directly after step B).

2. Method as claimed in claim 1, wherein the second LSP material is provided in at least one of the first and the second molded part.

3. Method as claimed in any one of the preceding claims, wherein at least one of the first and second molded parts comprises a laminate of stacked layers, and at least one of the first and second LSP material is provided as an outer layer of the laminate, or a layer below an outer layer of the laminate.

4. Method as claimed in any one of the preceding claims, wherein at least one of the first and second LSP material comprises a metal planar structure, such as a metal mesh or metal foil.

5. Method as claimed in claim 4, wherein the metal is copper.

6. Method as claimed in any one of the preceding claims, wherein the heat sink has a planar dimension in contact with the pressurizing surface larger than a cross-sectional dimension of the inductor.

7. Method as claimed in any one of the preceding claims, wherein the heat sink is made from a ceramic material.

8. Method as claimed in any one of the preceding claims, wherein the inductor has a linear segment such that the inductor is configured to generate a substantially cylindrical electromagnetic field in at least the surfaces to be connected of the molded parts in step C).

9. Method as claimed in claim 8, wherein the inductor is positioned in the pressurizing body such that the linear segment extends substantially parallel to the pressurizing surface of the pressurizing body.

10. Method as claimed in any one of the preceding claims, wherein the heat meltable coupling means comprises a thermoplastic polymer and/or the induction-sensitive component comprises carbon fibres, metal and/or ferromagnetic particles.

11. Method as claimed in any one of the preceding claims, wherein pressure is applied at a side of the joined molded parts opposite to the pressurizing surface.

12. Method as claimed in any one of the preceding claims, wherein the inductor is provided at an end of a robotic arm to define a welding path.

13. Method as claimed in any one of the preceding claims, wherein the first molded part comprises a skin panel of an aircraft, and the second molded part comprises a stiffener for supporting the skin panel.

14. Assembly of a first molded part (2) and a second molded part (3), surfaces whereof are connected by electromagnetic welding, the first molded part being provided with a first lightning strike protection, namely first LSP, material (21) at an outer surface thereof, wherein a second lightning strike protection, namely second LSP, material (22) is provided at the surfaces to be connected, **characterized in that** the first LSP and the second LSP material are positioned such that they do not contact each other directly.

15. Assembly as claimed in claim 14, wherein the first molded part comprises a skin panel of an aircraft, and the second molded part comprises a stiffener for supporting the skin panel.

## Patentansprüche

1. Verfahren zum Verbinden von Oberflächen eines ersten Formteils (2) und eines zweiten Formteils (3) durch elektromagnetisches Schweißen, wobei das erste Formteil mit einem ersten Blitzeinschlagschutzmaterial (21), nämlich erstes LSP-Material, an einer Außenoberfläche davon versehen ist, umfassend die Schritte:
A) Bereitstellen des ersten und des zweiten Formteils, um ein wärmeschmelzbares Kopplungsmittel und eine induktionsempfindliche Komponente zu umfassen;
B) Zusammenbringen der zu verbindenden Oberflächen und Druckbeaufschlagen der zu verbindenden Oberflächen durch Bereitstellen einer Druckoberfläche (100) eines Druckkörpers (10) an den Formteilen;
C) Erzeugen eines elektromagnetischen Felds in mindestens den zu verbindenden Oberflächen der Formteile mittels eines Induktors (11), wobei dadurch das Kopplungsmittel durch Erwärmen der induktionsempfindlichen Komponente wärmegeschmolzen wird;
D) Kühlen der Außenoberfläche des ersten Formteils durch Bereitstellen einer Wärmesenke (13) in direkter Berührung mit der Außenoberfläche;
E) Koppeln der Formteile unter Druck durch das geschmolzene wärmeschmelzbare Kopplungsmittel;
wobei ein zweites Blitzeinschlagschutzmaterial (22), nämlich zweites LSP-Material, an den zu verbindenden Oberflächen bereitgestellt ist und wobei das erste LSP- und das zweite LSP-Material derart positioniert sind, dass sie einander nach Schritt B) nicht direkt berühren.

2. Verfahren nach Anspruch 1, wobei das zweite LSP-Material in mindestens einem des ersten und des zweiten Formteils bereitgestellt ist.

3. Verfahren nach einem der vorstehenden Ansprüche, wobei mindestens eines des ersten und des zweiten Formteils ein Laminat aus gestapelten Schichten umfasst und mindestens eines des ersten und des zweiten LSP-Materials als eine Außenschicht des Laminats oder eine Schicht unterhalb einer Außenschicht des Laminats bereitgestellt ist.

4. Verfahren nach einem der vorstehenden Ansprüche, wobei mindestens eines des ersten und des zweiten LSP-Materials eine planare Metallstruktur umfasst, wie ein Metallgitter oder eine Metallfolie.

5. Verfahren nach Anspruch 4, wobei das Metall Kupfer ist.

6. Verfahren nach einem der vorstehenden Ansprüche, wobei die Wärmesenke eine planare Abmessung in Berührung mit der Druckoberfläche aufweist, die größer als eine Querschnittsabmessung des Induktors ist.

7. Verfahren nach einem der vorstehenden Ansprüche, wobei die Wärmesenke aus einem Keramikmaterial hergestellt ist.

8. Verfahren nach einem der vorstehenden Ansprüche, wobei der Induktor ein lineares Segment derart aufweist, dass der Induktor konfiguriert ist, um in Schritt C) in mindestens den zu verbindenden Oberflächen der Formteile ein im Wesentlichen zylindrisches elektromagnetisches Feld zu erzeugen.

9. Verfahren nach Anspruch 8, wobei der Induktor in dem Druckkörper derart positioniert ist, dass sich das lineare Segment im Wesentlichen parallel zu der Druckoberfläche des Druckkörpers erstreckt.

10. Verfahren nach einem der vorstehenden Ansprüche, wobei das wärmeschmelzbare Kopplungsmittel ein thermoplastisches Polymer umfasst und/oder die induktionsempfindliche Komponente Kohlenstofffasern, Metall und/oder ferromagnetische Partikel umfasst.

11. Verfahren nach einem der vorstehenden Ansprüche, wobei Druck an einer der Druckoberfläche gegenüberliegenden Seite der aneinandergefügten Formteile ausgeübt wird.

12. Verfahren nach einem der vorstehenden Ansprüche, wobei der Induktor an einem Ende eines Roboterarms bereitgestellt ist, um einen Schweißpfad zu definieren.

13. Verfahren nach einem der vorstehenden Ansprüche, wobei das erste Formteil ein Hautfeld eines Luftfahrzeugs umfasst und das zweite Formteil eine Versteifung zum Stützen des Hautfelds umfasst.

14. Anordnung eines ersten Formteils (2) und eines zweiten Formteils (3), wobei die Oberflächen davon durch elektromagnetisches Schweißen verbunden werden, wobei das erste Formteil mit einem ersten Blitzeinschlagschutzmaterial (21), nämlich erstes LSP-Material, an einer Außenoberfläche davon versehen ist, wobei ein zweites Blitzeinschlagschutzmaterial (22), nämlich zweites LSP-Material, an den zu verbindenden Oberflächen bereitgestellt ist,
**dadurch gekennzeichnet, dass** das erste LSP- und das zweite LSP-Material derart positioniert sind, dass sie einander nicht direkt berühren.

15. Anordnung nach Anspruch 14, wobei das erste Formteil ein Hautfeld eines Luftfahrzeugs umfasst und das zweite Formteil eine Versteifung zum Stützen des Hautfelds umfasst.

## Revendications

1. Procédé de raccordement des surfaces d'une première pièce moulée (2) et d'une seconde pièce moulée (3) par soudage électromagnétique, la première pièce moulée étant pourvue d'un premier matériau de protection contre la foudre, à savoir le premier LSP, (21) sur une surface externe de celle-ci, comprenant les étapes consistant à :
A) fournir la première et la seconde pièce moulée pour comprendre un moyen d'accouplement thermofusible et un composant sensible à l'induction ;
B) réunir les surfaces à relier et mettre sous pression les surfaces à relier en fournissant une surface de mise sous pression (100) d'un corps de mise sous pression (10) contre les pièces moulées ;
C) générer un champ électromagnétique dans au moins les surfaces à relier des pièces moulées au moyen d'un inducteur (11), ce qui fait fondre par la chaleur le moyen d'accouplement en chauffant le composant sensible à l'induction ;
D) refroidir la surface externe de la première pièce moulée en fournissant un dissipateur thermique (13) en contact direct avec la surface externe ;
E) accoupler les pièces moulées sous pression à l'aide du moyen d'accouplement thermofusible fondu ;
dans lequel un second matériau de protection contre la foudre, à savoir le second LSP, (22), est fourni au niveau des surfaces à relier, et dans lequel le premier LSP et le second LSP sont positionnés de telle sorte qu'ils n'entrent pas en contact l'un avec l'autre directement après l'étape B).

2. Procédé selon la revendication 1, dans lequel le second matériau LSP est fourni dans au moins l'une de la première et la seconde pièce moulée.

3. Procédé selon l'une quelconque des revendications précédentes, dans lequel au moins l'une des première et seconde pièces moulées comprend un stratifié de couches empilées, et au moins l'un des premier et second matériaux LSP est fourni en tant que couche externe du stratifié, ou que couche située en dessous d'une couche externe du stratifié.

4. Procédé selon l'une quelconque des revendications précédentes, dans lequel au moins l'un des premier et second matériaux LSP comprend une structure plane métallique, telle qu'une maille métallique ou une feuille métallique.

5. Procédé selon la revendication 4, dans lequel le métal est le cuivre.

6. Procédé selon l'une quelconque des revendications précédentes, dans lequel le dissipateur thermique a une dimension plane en contact avec la surface de mise sous pression plus grande qu'une dimension transversale de l'inducteur.

7. Procédé selon l'une quelconque des revendications précédentes, dans lequel le dissipateur thermique est réalisé en matériau céramique.

8. Procédé selon l'une quelconque des revendications précédentes, dans lequel l'inducteur présente un segment linéaire de telle sorte que l'inducteur soit configuré pour générer un champ électromagnétique sensiblement cylindrique dans au moins les surfaces à relier des pièces moulées à l'étape C).

9. Procédé selon la revendication 8, dans lequel l'inducteur est positionné dans le corps de mise sous pression de telle sorte que le segment linéaire s'étende sensiblement parallèlement à la surface de mise sous pression du corps de mise sous pression.

10. Procédé selon l'une quelconque des revendications précédentes, dans lequel le moyen d'accouplement thermofusible comprend un polymère thermoplastique et/ou le composant sensible à l'induction comprend des fibres de carbone, des particules métalliques et/ou ferromagnétiques.

11. Procédé selon l'une quelconque des revendications précédentes, dans lequel la pression est appliquée au niveau d'un côté des pièces moulées jointes en regard de la surface de mise sous pression.

12. Procédé selon l'une quelconque des revendications précédentes, dans lequel l'inducteur est fourni au niveau d'une extrémité d'un bras robotisé pour définir un chemin de soudage.

13. Procédé selon l'une quelconque des revendications précédentes, dans lequel la première pièce moulée comprend un panneau de revêtement d'un aéronef, et la seconde pièce moulée comprend un raidisseur pour supporter le panneau de revêtement.

14. Ensemble d'une première pièce moulée (2) et d'une seconde pièce moulée (3), dont les surfaces sont reliées par soudage électromagnétique, la première pièce moulée étant pourvue d'un premier matériau de protection contre la foudre, à savoir le premier LSP, (21) au niveau d'une surface externe de celle-ci, dans lequel un second matériau de protection contre la foudre, à savoir le second LSP, (22) est fourni au niveau des surfaces à relier, **caractérisé en ce que** le premier LSP et le second LSP sont positionnés de telle sorte qu'ils n'entrent pas directement en contact l'un avec l'autre.

15. Ensemble selon la revendication 14, dans lequel la première pièce moulée comprend un panneau de revêtement d'un aéronef, et la seconde pièce moulée comprend un raidisseur pour supporter le panneau de revêtement.
